Europäisches Patentamt

European Patent Office

Office européen des brevets

(11) Numéro de publication: **0 169 106**
**A1**

(12) **DEMANDE DE BREVET EUROPEEN**

(21) Numéro de dépôt: **85401159.0**

(22) Date de dépôt: **12.06.85**

(51) Int. Cl.⁴: **A 23 P 1/14, A 23 K 1/00**

(30) Priorité: **21.06.84 FR 8409743**

(43) Date de publication de la demande: **22.01.86**
**Bulletin 86/4**

(84) Etats contractants désignés: **BE DE GB NL SE**

(71) Demandeur: **CLEXTRAL, Tour Fiat 1 place de la Coupole,**
**F-92400 Courbevoie (FR)**

(72) Inventeur: **Brisset, Alain, 4 Rue du Bois d'Avaize,**
**F-42100 Saint-Etienne (FR)**

(74) Mandataire: **Bressand, Georges et al, c/o CABINET**
**LAVOIX 2 Place d'Estienne d'Orves, F-75441 Paris**
**Cedex 09 (FR)**

(54) **Procédé de valorisation d'un produit végétal ou animal humide et produit nutritif réalisé selon ce procédé.**

(57) L'invention a pour objet un procédé de valorisation d'un produit très humide contenant une matière nutritive associée à une proportion importante d'eau et couvre également le produit réalisé suivant ce procédé.

Selon l'invention, on introduit le produit humide (2), avec une quantité dosée de matière pulvérulente sèche (3) à base de farine de céréale, à l'extrémité amont d'une machine d'extrusion (1) comprenant au moins deux vis imbriquées (11, 12) entraînées en rotation à l'intérieur d'un fourreau (10) comportant des moyens (16) de chauffage de la matière entraînée et muni à son extrémité aval d'une filière d'extrusion (14) et que l'on réalise à l'intérieur du fourreau (10) un mélange homogène du produit humide (2) avec la matière pulvérulente (3) et la cuisson simultanée de la matière nutritive et de la farine de céréale dans l'eau apportée par le produit humide, le mélange cuit (6) étant extrudé par la filière placée à l'extrémité aval du fourreau.

L'invention peut s'appliquer à la valorisation de déchets végétaux comme les épluchures de pommes de terre ou bien de déchets de poisson.

## Procédé de valorisation d'un produit végétal ou animal humide et produit nutritif réalisé selon ce procédé

L'invention a pour objet un procédé de valorisation d'un produit très humide et notamment d'un sous-produit de l'industrie agricole ou de la pêche, tel que des déchets résultant du pelage des pommes de terre ou des déchets de poissons.

Les installations de transformation de la pomme de terre produisent une quantité importante de déchets résultant du pelage mécanique ou à la vapeur des pommes de terre, ces déchets contenant une certaine quantité de peaux et de pulpe mélangées à une proportion très importante d'eau, pouvant aller jusqu'à 90 % par exemple. Le fabricant est obligé d'éliminer ces déchets ou de leur trouver une utilisation si possible rentable. Jusqu'à présent, pour utiliser ces déchets, on était obligé de les sécher au préalable. Cette opération peut difficilement se faire par une simple décantation étant donné la finesse des déchets, certaines matières nutritives étant, en fait, dissoutes dans l'eau. On utilise donc des sécheurs par évaporation qui nécessitent une dépense d'énergie importante. L'élimination des déchets est donc rarement rentable. C'est pourquoi, on préfère souvent les donner directement à des éleveurs de porcs, cet animal ayant l'avantage de digérer l'amidon de la pomme de terre. Cependant, on ne dispose pas toujours d'élevages importants à proximité des installations de transformation de la pomme de terre et le transport d'une matière volumineuse et de si faible valeur est rarement rentable.

Un problème analogue existe pour l'utilisation des déchets de l'industrie de la pêche qui contiennent également une proportion très importante d'eau. Généralement, ces déchets sont séchés pour servir de matière première à la fabrication de farine de poisson ou d'aliments pour animaux. Dans ce cas, le séchage préalable du produit, quelque soit le système employé, est coûteux en énergie.

L'invention a pour objet un nouveau procédé permettant de valoriser à peu de frais un produit très humide, végétal ou animal, contenant, d'une façon générale, une matière nutritive associée à une proportion importante d'eau.

Conformément à l'invention, on introduit le produit humide, avec une quantité dosée de matière pulvérulente sèche à base de farine de céréales, à l'extrémité amont d'une machine d'extrusion comprenant au moins deux vis imbriquées entrainées en rotation à l'intérieur d'un fourreau comportant des moyens de chauffage de la matière entrainée et muni à son extrémité aval d'une filière d'extrusion, et l'on réalise à l'intérieur du fourreau un mélange homogène du produit humide avec la matière pulvérulente et la cuisson simultanée de la matière nutritive et de la farine de céréale dans l'eau apportée par le produit humide, le mélange cuit étant extrudé par la filière placée à l'extrémité aval du fourreau.

Le produit humide peut contenir jusqu'à 90 % en poids d'eau et la quantité de matière pulvérulente sèche ajoutée au produit humide est réglée en fonction de la teneur en eau de ce dernier de façon à ramener le degré global d'humidité du mélange à l'entrée de la machine d'extrusion à un taux maximum d'environ 50 %.

Selon une autre caractéristique importante, on réalise un dégazage au cours de la cuisson de telle sorte que le produit extrudé par la filière ait un degré d'humidité de 15 à 30 % en poids.

Selon une autre caractéristique essentielle, on fait passer la matière alimentée à l'amont de la machine d'extrusion par une succession de zones déterminées par variation du pas des filets des vis, respectivement, une zone à pas large de transport vers l'aval avec malaxage, une zone de compression à pas resserré, une zone de freinage et d'homogénéisation à pas inversé, une zone de détente et de dégazage à pas élargi et une zone de compression à pas resserré, précédant la filière d'extrusion, la zone de détente étant munie d'un orifice de mise en dépression ménagé dans le fourreau.

L'invention a également pour objet le produit nutritif résultant, selon le procédé, de la valorisation d'un produit très humide et constitué par un mélange dudit produit et d'une proportion dosée de matière pulvérulente sèche à base de farine de céréales, ce mélange étant effectué dans une extrudeuse et soumis simultanément à un processus de cuisson- extrusion jusqu'à obtention d'un boudin extrudé susceptible d'être coupé pour former des granulés.

L'invention sera mieux comprise par la description qui va suivre de plusieurs modes de réalisation donnés à titre d'exemples, en se référant aux dessins annexés.

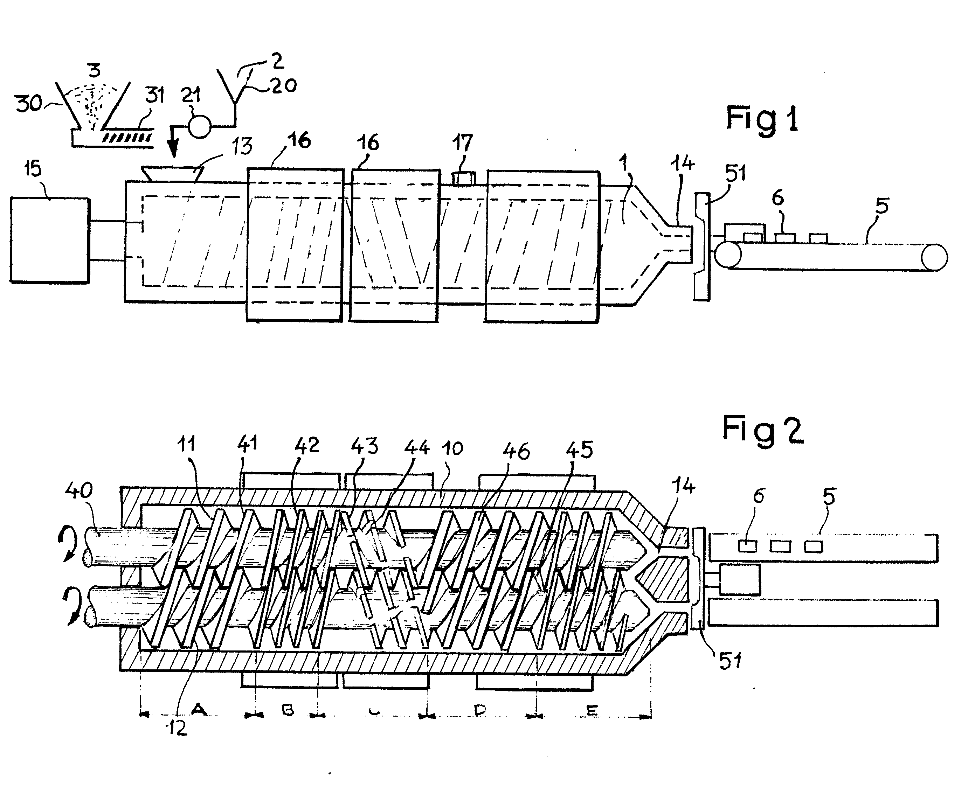

La figure 1 est une vue schématique en élévation d'une installation de valorisation d'un produit humide selon l'invention.

La figure 2 est une vue de dessus, en coupe par un plan passant par les axes des vis.

L'installation pour la mise en oeuvre du procédé, représentée sur les dessins, comprend essentiellement une extrudeuse 1 constituée d'un four-

3  0169106

reau allongé 10 à l'intérieur duquel sont placées deux vis parallèles 11 et 12, à filets identiques engrènant les uns dans les autres. Le fourreau 10 est muni à son extrémité amont, dans le sens de transport de vis, d'un orifice d'alimentation 13 et, à son extrémité aval, d'une filière d'extrusion 14. Les deux vis sont entrainées en rotation par un groupe moto-réducteur 15.

Le produit à valoriser 2 et se présentant sous la forme d'une boue très liquide 2 est alimenté à partir d'une trémie 20 par une pompe 21 débouchant dans la trémie d'alimentation 13 et permettant d'alimenter l'extrudeuse par un débit dosé de produit humide 2.

Selon l'invention, le produit 2 est mélangé dans l'extrudeuse à une matière pulvérulente séche 3 alimentée à partir d'une trémie 30 par exemple par un doseur à vis 31 débouchant au-dessus de l'orifice d'alimentation 13 et permettant d'y introduire un débit dosé de matière pulvérulente 3. Celle-ci est constituée essentiellement d'une farine de céréale mais peut contenir d'autres produits pulvérulents secs, en quantité variable, tels que par exemple, du son.

Pour réaliser un bon mélange, il est préférable d'utiliser une machine d'extrusion à deux vis qui permet de fonctionner en pompe et par conséquent d'entrainer vers l'aval aussi bien des produits secs que des produits liquides, sans que les filets des vis aient besoin d'être complètement remplis. De préférence, on utilise une machine d'extrusion comportant deux vis à filets identiques engrenant l'une dans l'autre et entraînées en rotation dans le même sens, de telle sorte que la matière tourne autour des vis, en passant d'un filet à l'autre, à la hauteur de la zone d'engrènement. Du fait de la diminution de la largeur du filet due à l'engrènement des vis, la matière subit dans cette zone un freinage avec compression. La matière passe donc, en tournant autour des vis à l'intérieur des filets successifs, par une succession de phases de détente et de compression qui favorisent le mélange.

De la sorte, le produit humide 2 et la matière sèche 3, introduits en quantité dosée par l'orifice 13, sont immédiatement pris en charge par les vis 11 et 12 qui, dans la zone A d'alimentation, ont un pas large permettant d'entrainer rapidement vers l'aval la matière alimentée. Le mélange se produit donc au fur et à mesure de l'alimentation et la matière est immédiatement soumise à un chauffage réalisé au moyen de jaquettes chauffantes 16 qui sont réparties le long du fourreau.

Selon la caractéristique essentielle de l'invention, la quantité de farine de céréale 3 ajoutée au produit 2 dans l'orifice d'alimentation 13 est réglée en fonction de la teneur en eau du produit humide 2 de façon que la teneur en eau globale du mélange ne dépasse pas environ 50 %. On peut ainsi, dès le début des vis, réaliser la cuisson progressive de la céréale et de la pomme de terre, et notamment la gélatinisation des amidons, au contact de l'eau apportée par le produit humide.

Le processus de cuisson-extrusion était déjà utilisé depuis longtemps pour réaliser des produits alimentaires à partir de céréales, auxquelles on ajoutait la quantité d'eau nécessaire à la cuisson. Mais l'invention se caractérise par le fait que l'eau est apportée par un produit qui, jusqu'à présent, était séché à grand frais, ce qui permet de valoriser ce produit, la céréale étant seulement ajoutée en quantité limitée, pour ramener le taux d'humidité du mélange initial à la valeur voulue.

Dans la zone d'alimentation A, les filets ne sont pas remplis de matière. Celle-ci est entrainée vers l'aval par les vis et passe ensuite par une zone B à pas resserré qui précède une zone de freinage C munie de filets à pas inversé. Il se produit donc dans la zone B une compression progressive du mélange avec un effet combiné de cisaillement, notamment au passage d'un filet à l'autre dans la zone d'engrènement des vis.

Dans la zone C de freinage, les filets 43 à pas inversé sont munis d'ouvertures 44 qui s'étendent radialement entre l'arbre 40 de la vis et la périphérie du filet. Ces ouvertures 44 sont réparties régulièrement autour de l'axe et les vis sont calées de telle sorte que les ouvertures de deux filets voisins engrènant l'un dans l'autre viennent en coïncidence simultanément dans la zone d'engrènement 45. De la sorte, on ménage dans cette zone, à chaque pas, un orifice qui s'ouvre et se ferme périodiquement de façon à laisser passer, à chaque fois, une certaine quantité de matière vers la zone aval moins comprimée. Ce processus permet de réaliser l'homogénéisation du mélange dans la zone de freinage C.

La matière passe alors dans une zone D à pas élargi où elle peut se détendre en se répandant dans les filets 46. Le fourreau 10 est muni dans cette zone d'un orifice 17 de mise en dépression qui peut s'ouvrir sur l'extérieur ou bien être relié à une pompe à vide. On réalise ainsi dans la zone de détente D un dégazage de la matière qui permet d'éliminer encore une certaine quantité d'eau sous forme de vapeur. La matière est ainsi amenée à son taux d'humidité optimal qui, compte tenu des constituants, peut être de l'ordre de 15 à 30 %. Elle passe dans une nouvelle zone de compression E qui précède la filière 14 placée à l'extrémité aval du fourreau 10 et par laquelle on extrude le produit cuit. La quantité d'eau restant à l'intérieur de celui-ci est maintenue sous pression se vaporise brusquement à la sortie de l'extrudeuse et provoque l'expansion du produit avec formation d'une structure alvéolaire grâce à l'amidon cuit contenu. Le produit peut donc être séché naturellement à l'air après sa sortie de l'extrudeuse, par exemple sur un tapis transporteur 5. D'autre part, en limitant la teneur en eau du produit extrudé à une valeur comprise entre 10 et 30 %, et de préférence de 12 à 15 %, pour une céréale telle que le blé, on obtient l'extrusion d'un boudin qui peut être coupé facilement en tronçons 6 par exemple au moyen d'un couteau rotatif 51.

A titre d'exemple, dans une machine ne dépassant pas 1 mètre de long, on a réalisé un produit nutritif à partir de déchets de pommes de terre avec un débit de 100 à 130 kg/h. La machine était alimentée par un mélange de déchets de pommes de terre à 80 % d'eau, dans une proportion de 40 à 50 %, avec un mélange de farine de céréale et de son dans une proportion de 50 à 60%. On a utilisé une farine d'avoine et une farine de blé. Le produit était extrudé par deux filières de 8 mm de diamètre placées chacune dans l'axe d'une vis. Celles-ci avaient la composition indiquée plus haut. Le fourreau était chauffé par les jaquettes chauffantes 16 à une température de 280°C dans la première zone de compression et de 250°C dans les autres zones.

Le procédé selon l'invention a donc permis de valoriser sans séchage préalable un déchet de pomme de terre contenant 80 à 90 % d'eau pour la fabrication d'un produit utilisable notamment en alimentation animale.

Le même procédé pourrait être employé pour valoriser d'autres déchets végétaux, par exemple des épluchures de fruits ou de légumes ou bien de la pulpe de betterave.

Mais on peut aussi utiliser le procédé pour la valorisation de déchets animaux et notamment de déchets de poissons ou, d'une façon générale, de produits de la pêche. Ces déchets sont constitués essentiellement par les têtes les arêtes et les peaux éliminées lors de l'extraction des filets des poissons. Ils sont déjà utilisés en alimentation humaine ou animale mais, compte tenu de leur très grande teneur en eau, il semblait nécessaire de les sécher pour en faire de la farine de poisson. Le procédé selon l'invention permet au contraire d'incorporer directement dans un tel produit une certaine quantité de matière sèche à base de farine de céréale, ce qui permet d'en diminuer la teneur globale en eau sans dépense excessive d'énergie. Comme indiqué précédemment, on réalise dans l'extrudeuse le mélange et la cuisson-extrusion du produit et de la céréale. En outre, on peut choisir les caractéristiques mécaniques des vis et notamment le pas des filets inversés et la dimension des ouvertures de façon à réaliser dans l'extrudeuse un broyage au moins partiel de certaines particules telles que les arêtes. Il est cependant préférable de réaliser un broyage préalable assez fin des déchets pour constituer une pâte susceptible d'être introduite dans l'orifice d'alimentation 13 de l'extrudeuse au moyen d'une pompe, ce qui permet de régler facilement le débit d'alimentation.

Le procédé peut s'adapter à n'importe quelle recette et, en particulier, il pourra être utile d'introduire avec la farine de céréale une farine de poisson et de l'huile.

A titre d'exemple, on a pu réaliser un produit avec un débit de l'ordre de 150 à 200 kg/h dans une machine analogue à celle décrite précédemment et représentée sur les dessins. On a mélangé un déchet de poisson contenant 70 à 80 % d'eau et dans une proportion de 30 à 35 % avec 9 à 11 % de farine de poisson, 2 à 3 % d'huile et 50 à 60 % de farine de blé. Compte tenu de cette proportion relativement importante de farine, la teneur en eau globale du mélange à l'entrée de l'extrudeuse était de 30 à 40 %. Dans cet essai, on ne réalisait pas de dégazage au cours de la cuisson et l'on obtenait à la sortie de la filière un produit contenant 15 à 25 % d'eau. Si l'on fait, en revanche, un dégazage par un orifice placé dans une section de détente à l'aval de la section à pas inversé C, on peut diminuer la teneur en farine de céréale jusqu'à un degré de 20 à 30 %. On voit que, dans ce cas, le produit est particulièrement économique puisqu'il permet de réaliser un produit nutritif contenant près de 50 % d'un déchet de poisson.

Bien entendu, l'invention ne se limite pas aux seuls exemples qui viennent d'être décrits. Elle pourrait faire l'objet de variantes et perfectionnements en restant dans le cadre de protection revendiquée.

En particulier, on peut faire varier les recettes dans la mesure où l'important est de mélanger un produit pulvérulent sec avec le produit humide de façon à ramener celui-ci à une teneur en eau globale permettant son transport facile et sa cuisson dans les vis. En particulier, selon la composition du produit à valoriser on pourrait lui apporter les constituants nécessaires de façon à produire un aliment nutritionnellement équilibré pour l'alimentation animale ou humaine.

D'autre part, le même procédé peut être utilisé pour valoriser des produits de la pêche peu rentables tels que des poissons frais ou congelés de qualité peu recherchée, des crevettes, des mollusques, etc... . Jusqu'à présent, en effet, l'utilisation de tels produits était limitée par leur teneur en eau importante qui nécessitait un séchage coûteux et, en supprimant ce séchage, l'invention permet de les valoriser de façon rentable.

REVENDICATIONS

1. Procédé de valorisation d'un produit très humide contenant une matière nutritive associée à une proportion importante d'eau, caractérisé par le fait que l'on introduit le produit humide (2), avec une quantité dosée de matière pulvérulente sèche (3) à base de farine de céréale, à l'extrémité amont d'une machine d'extrusion (1) comprenant au moins deux vis imbriquées (11, 12) entrainées en rotation à l'intérieur d'un fourreau (10) comportant des moyens (16) de chauffage de la matière entrainée et muni à son extrémité aval d'une filière d'extrusion (14) et que l'on réalise à l'intérieur du fourreau (10) un mélange homogène du produit humide (2) avec la matière pulvérulente (3) et la cuisson simultanée de la matière nutritive et de la farine de céréale dans l'eau apportée par le produit humide, le mélange cuit (6) étant extrudé par la filière placée à l'extrémité aval du fourreau.

2. Procédé de valorisation d'un produit humide selon la revendication 1, caractérisé par le fait que le produit humide (2) peut contenir jusqu'à 90% en poids d'eau et que l'on règle la quantité de matière pulvérulente sèche (3) ajoutée au produit humide en fonction de la teneur en eau de ce dernier de façon à ramener le degré global d'humidité du mélange dans la partie amont de la machine d'extrusion (1) à un taux d'environ 50 % au maximum.

3. Procédé de valorisation d'un produit humide selon l'une des revendications 1 et 2, caractérisé par le fait que l'on réalise un dégazage au cours de la cuisson de telle sorte que le produit (6) extrudé par la filière ait un degré d'humidité de 10 à 30 % en poids.

4. Procédé de valorisation d'un produit humide selon l'une des revendications précédentes, caractérisé par le fait que l'on fait passer la matière alimentée à l'amont de la machine d'extrusion (1) par une succession de zones déterminées par variation du pas des filets des vis, respectivement une zone (A) à pas large de transport vers l'aval avec malaxage, une zone (B) de compression à pas resserré, une zone (C) de freinage et d'homogénéisation à pas inversé, une zone (D) de détente et de dégazage à pas élargi, et une zone (E) de compression à pas resserré précédant la filière d'extrusion (14), la zone de détente (D) étant munie d'un orifice (17) de mise en dépression, ménagé dans le fourreau (10).

9      0169106

5. Procédé de valorisation d'un produit humide selon l'une des revendications précédentes,

caractérisé par le fait que l'on recycle, à l'entrée de la machine d'extrusion (1) une partie du produit (6) extrudé de façon à diminuer la proportion de farine de céréale (3) nécessaire à l'abaissement de la teneur en eau globale du mélange.

6. Produit nutritif résultant de la valorisation d'un produit très humide contenant une matière nutritive associée à une proportion importante d'eau,

caractérisé par le fait qu'il est constitué par un mélange du produit très humide (2) et d'une proportion dosée d'une matière pulvérulente sèche (3) à base de farine de céréale, le mélange étant effectué dans une machine d'extrusion (1) et soumis simultanément à un processus cuisson-extrusion jusqu'à obtention d'un boudin (6) extrudé par une filière (14) à la sortie de la machine et susceptible d'être coupé pour former des granulés.

7. Produit nutritif selon la revendication 6,

caractérisé par le fait que le produit humide (2) peut contenir jusqu'à 90% en poids d'eau et que la proportion de matière sèche (3) ajoutée au produit humide (2) est réglée de façon que la teneur en eau globale du mélange dans la partie amont de la machine (1) ne dépasse pas 50 % en poids, environ.

8. Produit nutritif selon la revendication 7,

caractérisé par le fait que les proportions relatives de matière sèche (3) et de produit humide (2) et les conditions de cuisson sont réglées de façon que le produit (6) extrudé à la sortie de la machine ait un degré d'humidité de 15 à 30% en poids.

9. Produit nutritif selon l'une des revendications 6 à 8,

caractérisé par le fait que le produit humide (2) valorisé est un sous-produit de l'industrie alimentaire, la matière nutritive étant une pulpe végétale, notamment de la pomme de terre.

10. Produit nutritif selon l'une des revendications 6 à 8,

caractérisé par le fait que le produit humide valorisé est un produit ou un sous-produit de la pêche.

11. Produit nutritif selon la revendication 6,

caractérisé par le fait que la matière sèche ajoutée au produit humide est un mélange de farine de céréale et de son.

Fig 1

3   2
30   31   21   20

15   13   16   16   17   1   14   51   6   5

Fig 2

11   41   42   43   44   10   46   45   14   6   5

40

12   A   B   C   D   E   51

Office européen
des brevets

**RAPPORT DE RECHERCHE EUROPEENNE**

0169106

Numero de la demande

EP 85 40 1159

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int Cl.4) |
|---|---|---|---|
| X | US-A-4 418 086 (R. MARINO) <br><br> * Revendication 1; colonne 4, lignes 10-34; colonne 6, ligne 50 - colonne 9, ligne 9; exemple * <br> --- | 1,2,6-8,10 | A 23 P 1/14 <br> A 23 K 1/00 |
| Y | US-A-3 447 929 (D. HALE) <br><br> * Revendication 3; exemple III; colonne 3, lignes 58-61; colonne 4, lignes 3-12; colonne 2, lignes 14-46 * <br> --- | 1,2,6-10 | |
| Y | FR-A-2 432 842 (SODES) <br><br> * Revendications 1-7,9-11; exemple * <br> --- | 1,2,6-10 | |
| A | US-A-4 020 187 (M. McCULLOCH) <br> * Revendication 1; colonne 1, ligne 32 - colonne 2, ligne 16; exemples 1,2 * <br> --- | 1-3 | DOMAINES TECHNIQUES RECHERCHES (Int. Cl.4) <br><br> A 23 P <br> A 23 K <br> A 23 L |
| A | DE-C-1 190 311 (GENERAL FOODS) <br> * Revendication 1; colonne 7, ligne 46 - colonne 8, ligne 19 * <br> --- | 1,9,10 | A 23 J |
| A | FR-A-2 340 054 (GRANDES MINOTERIES A FEVES DE FRANCE) <br> * Revendications 1,6-11; page 2, ligne 24 - page 4, ligne 10; figure 3 * <br> --- -/- | 1,3,4 | |

Le présent rapport de recherche a été établi pour toutes les revendications

| Lieu de la recherche | Date d'achèvement de la recherche | Examinateur |
|---|---|---|
| LA HAYE | 30-09-1985 | DESMEDT G.R.A. |

Office européen
des brevets

| Catégorie | Citation du document avec indication. en cas de besoin. des parties pertinentes | Revendication concernee | CLASSEMENT DE LA DEMANDE (Int Cl.4) |
|---|---|---|---|
| A | US-A-4 101 684 (J. MASSON) <br> * Revendication 1 * <br> --- <br> ----- | 5 | |

**DOCUMENTS CONSIDERES COMME PERTINENTS**

DOMAINES TECHNIQUES RECHERCHES (Int. Cl.4)

Le présent rapport de recherche a été établi pour toutes les revendications

| Lieu de la recherche | Date d'achèvement de la recherche | Examinateur |
|---|---|---|
| LA HAYE | 30-09-1985 | DESMEDT C.R.A. |